# EUROPÄISCHE PATENTSCHRIFT

(11) **EP 3 623 220 B1**
(45) Veröffentlichungstag und Bekanntmachung des Hinweises auf die Patenterteilung: **01.12.2021**
(21) Anmeldenummer: 19192982.7
(22) Anmeldetag: 22.08.2019
(51) Int. Cl.: B60P 7/08, B65D 19/44, B60P 7/15, B65D 88/12, B65D 90/00, B65D 85/04, B65D 85/67

(54) **LADUNGSTRÄGER FÜR MINDESTENS EIN LADEGUT UND BEFESTIGUNGSMITTEL ZUR ANORDNUNG AN EINEM LADUNGSTRÄGER**
LOAD CARRIER FOR AT LEAST ONE LOAD AND FIXING MEANS FOR ARRANGEMENT ON A LOAD CARRIER
SUPPORT DE CHARGE POUR AU MOINS UNE CHARGE ET MOYEN DE FIXATION DESTINÉ À LA MISE EN PLACE SUR UN SUPPORT DE CHARGE

(30) Priorität: 05.09.2018 DE 102018121631; 05.09.2018 DE 202018105056 U
(43) Veröffentlichungstag der Anmeldung: 18.03.2020
(73) Patentinhaber: Licht, Ralph Dieter, 66871 Haschbach (DE)
(72) Erfinder: Licht, Ralph Dieter, 66871 Haschbach (DE)
(74) Vertreter: Müller, Jochen

(56) Entgegenhaltungen:
- EP-A1- 2 886 393
- DE-A1- 1 930 133
- DE-A1-102015 108 034
- SE-C2- 513 995

## Beschreibung

Die Erfindung bezieht sich auf ein Befestigungsmittel zur Anordnung an einem Ladungsträger für mindestens ein Ladegut und einen Ladungsträger für mindestens ein Ladegut, das mit mindestens einem lösbar an dem Ladungsträger gehaltenen Befestigungsmittel kraftschlüssig oder formschlüssig gehalten wobei das Befestigungsmittel mindestens ein Spannelement lagert, das zur Veränderung der lichten Breite des Befestigungsmittels verstellbar ist.

Zur Ladungssicherung von als Coil, Spaltband, Bandstahl, Drahtring oder Ronde oder dergleichen ausgebildeten Transportgegenständen, also Ladegut, an einem Ladungsträger, wie beispielsweise einem Transportgestell und/oder Lagergestell und/oder Lagerbock, in einer stehenden Verladeweise sollten die Transportgegenstände einen relativ geringen Abstand zueinander und zu an dem Ladungsträger angeordneten Befestigungsmitteln aufweisen, was sich in der Praxis aber als nur schwer realisierbar erweist. Beispielsweise werden als Befestigungsmittel so genannte Rungen, also sich vertikal zur Auflagefläche des Ladungsträgers erstreckende Haltepfosten verwendet, die den Ladungsträger randseitig begrenzen und/oder zwischen den Transportgegenständen angeordnet sind, um ein Verrutschen oder ein Kippen der Transportgegenstände zu verhindern. Da die Transportgegenstände unterschiedliche Abmessungen aufweisen, werden auch Rungen in verschiedenen Breiten verwendet.

Auch ist es üblich, Distanzelemente an den Rungen anzuordnen, die an den Transportgegenständen zur Anlage kommen. Diese bekannten Ladungssicherungsmaßnahmen sind aufwändig zu realisieren und auch nicht stets wirkungsvoll.

Die DE 17 81 124 A, DE 10 2015 108 034 A1 und EP 2 886 393 A1 offenbaren Vorrichtungen zur Sicherung von Ladegut.

Im Weiteren ist aus der EP 1 733 955 A1 Vorrichtung zur Sicherung einer Ladung eines Fahrzeugs zum Schutz vor Querverlagerungen der Ladung mit zumindest einem in unterschiedlichen Positionen in Fahrzeuglängsrichtung am Ladeboden lösbar festlegbaren Querbalken, wobei zumindest ein in unterschiedlichen Positionen in Fahrzeugquerrichtung lösbar an dem als Unterlage für die Ladung vorsehbaren Querbalken festlegbarer Stützbalken vorgesehen ist. Ein hakenförmiges Ende des Stützbalkens ist zum Eingriff in eine Ausnehmung des Querbalkens ausgebildet wobei das hakenförmige Ende des Stützbalkens durch Verschwenken desselben in die Ausnehmung eingreift und dass der Querbalken auf zwei Seiten mit einer Rasterung zur Positionierung des Stützbalkens versehen ist.

Darüber hinaus offenbart die EP 2 266 835 A1 ein Fahrzeug mit einem Ladeboden mit einer Vorrichtung zur Sicherung einer Ladung die mehrere, in unterschiedlichen Lagepositionen an dem Ladeboden festlegbare Stützbalken zur Ladungssicherung aufweist, wobei die Stützbalken in in dem Ladeboden vorgesehene Stützöffnungen einsteckbar sind und in Längsrichtung des Ladebodens mit Abstand zueinander angeordnete Stützöffnungsabschnitte mit mehreren, in Reihe hintereinander angeordneten Stützöffnungen vorgesehen sind.

Der Erfindung liegt die Aufgabe zugrunde, ein Befestigungsmittel und einen Ladungsträger mit einem solchen Befestigungsmittel der eingangs genannten Art zu schaffen, mit dem eine zuverlässige und schnelle sowie einfach zu bewerkstelligende Sicherung des zu transportierenden Lagegutes sichergestellt ist, wobei keine zusätzlichen Sicherungen wie Spanngurte oder dergleichen zum Einsatz kommen.

Bei einem Befestigungsmittel wird die Aufgabe erfindungsgemäß dadurch gelöst, dass mindestens ein mittels eines Kniehebels oder Scherengestänges oder einer Kolben-/Zylindereinheit senkrecht zu einer Längsachse des Befesti-gungsmittels verlagerbares Spannelement dem Befestigungsmittel zugeordnet ist, wobei der Kniehebel oder das Scherengestänge oder die Kolben-/Zylindereinheit in einem Hohlraum des zumindest abschnittweise rohrförmi-gen Befestigungsmittels angeordnet ist.

Der Ladungsträger umfasst mindestens ein an dem Ladungsträger gehaltenes Befestigungsmittel für mindestens ein Ladegut, das mit dem Befestigungsmittel lösbar kraftschlüssig oder formschlüssig gehalten ist, wobei das Befestigungsmittel mindestens ein Spannelement lagert, das zur Veränderung der lichten Breite des Befestigungsmittels verstellbar ist.

Demnach ist zur Befestigung von Ladegut kein Austausch von Befestigungsmitteln und auch kein besonderes Lagern von Ladegütern nahe beieinander oder nahe zu den Befestigungsmitteln erforderlich, um das unbeabsichtigte Verlagern von Ladegut auf dem Ladungsträger zu verhindern. Durch die Veränderung der lichten Breite des Befestigungsmittels, das beispielsweise in seinem Durchmesser nach der Art eines Dübels gespreizt werden kann oder bei dem flügelartige Spannelemente vorgesehen sind, die in Anlage an das Ladegut gebracht werden, ist das Ladegut insbesondere zwischen zwei Befestigungsmitteln oder einem Befestigungsmittel und einem starren Anschlag sicher kraftschlüssig gehalten.

Das Spannmittel lässt sich mittels des Kniehebels oder Scherengestänges oder der Kolben-/Zylindereinheit aus einer Ruhelage in eine Spannlage verlagern, wobei die lichte Breite oder Weite des Befestigungsmittels im Bereich des Spannmittels in dessen eingefahrener Ruhelage oder Ausgangslage geringer bemessen ist als in der ausgefahrenen Spannlage. Das Spannmittel kann als eine Art Spannbacke oder bolzenförmig ausgebildet sein und auch beispielsweise mittels Lager- oder Führungsmittel an dem Befestigungsmittel, das auch als Befestigungsvorrichtung oder Vario-Runge bezeichnet werden kann, angeordnet sein.

Selbstverständlich kann der Ladungsträger, insbesondere dessen Auflagefläche für das Ladegut, an das Ladegut angepasst sein, beispielsweise eine V-förmige Auflagefläche, die auch in ihrer Neigung verstellbar sein kann, aufweisen, um ein zylindrisches Ladegut, beispielsweise ein Coil, einzulegen.

In Ausgestaltung erstreckt sich das Befestigungsmittel rungenartig zu dem Ladungsträger und das eine Spannbacke umfassende Spannelement ist senkrecht zu einer Längsachse des Befestigungsmittels verlagerbar. Das rungenartige Befestigungsmittel, eine Art Pfosten, lässt sich beispielsweise auf einen Befestigungszapfen des Ladungsträgers aufstecken oder in eine Öffnung zur Aufnahme einstecken oder mittels eines fußseitigen Flansches und Befestigungselementen, wie Schrauben oder dergleichen, an dem Ladungsträger befestigen, das mindestens eine Spannelement ragt aus dem Befestigungsmittel heraus und zumindest die an das Ladegut anlegbare Spannbacke, ist in ihrer Lage im Wesentlichen senkrecht zur Längsachse des Befestigungselementes derart verstellbar, dass sie in Anlage an ein benachbartes Ladegut bringbar ist, um dieses in seiner Lage zu sichern. Selbstverständlich können mehrere, auch miteinander gekoppelte Spannelemente, die beispielsweise gegenüberliegende, kreuzförmig oder sternförmig zueinander angeordnete Spannbacken umfassen können, angeordnet bzw. gelagert sein. Das Verlagern der Spannbacken bzw. der Spannelemente kann mittels eines zentralen Aktuators erfolgen, der alle vorhanden Spannelemente bzw. Spannbacken gemeinsam oder separat verlagert. Dies kann beispielsweise auch mittels ineinandergreifender konischer Elemente erfolgen die axial ineinander geschoben werden und einen Spreizwirkung in Radialer Richtung bewirken.

Nach einer Weiterbildung ist das Befestigungsmittel rohrförmig und in dem Befestigungsmittel ist ein sich durch dessen Rohrwandung erstreckender Kniehebel oder ein Scherengestänge zur Verlagerung des mindestens einen Spannelementes angeordnet. Das Scherengestänge kann beispielsweise vier Gestängeelemente umfassen, die jeweils endseitig gelenkig miteinander verbunden sind, wobei zwei gegenüberliegende Gelenke mittels eines an dem Befestigungsmittel angeordneten Verstellelementes, beispielsweise in Form einer Gewindespindel, eines Hydraulikzylinders oder dergleichen, relativ zueinander bewegbar sind und die beiden anderen Gelenke die Spannbacken haltern. Das Scherengestänge funktioniert demnach im Wesentlichen wie ein Scherenwagenheber.

Zweckmäßigerweise weist das Befestigungsmittel einen quadratischen Querschnitt auf. Die Ausrichtung kann derart erfolgen, dass eine Umfangsfläche mit zugeordnetem Spannelement parallel zu dem Ladegut angeordnet ist.

Vorzugsweise ist das mindestens eine Spannelement mit einer einen Hydraulikzylinder umfassenden Hydraulikeinrichtung oder einer Gewindespindel zu seiner Verstellung aus einer Ausgangslage, in der es benachbart zu der zugeordneten Rohrwandung des Befestigungsmittels angeordnet ist, in eine Spannlage, in der es beabstandet der zugeordneten Rohrwandung des Befestigungsmittels ausgerichtet ist, verlagerbar und umgekehrt. Die Spannbacken können in ihrem Querschnitt an die Geometrie des Befestigungsmittels angepasst sein, also beispielsweise bogenförmig oder U-förmig, und sich in der Ausgangslage quasi an die Rohrwandung des Befestigungsmittels anlegen, gegebenenfalls mit einem relativ geringen Spalt zwischen der Rohrwandung und der Spannbacke.

Zur Verlagerung der Spannbacken bzw. Spannelemente aus der Ausgangslage in die Spannlage, in der gegebenenfalls Ladegut beaufschlagt wird, ist vorzugsweise die Gewindespindel mit einer Kurbel oder elektromotorisch antreibbar. Zweckmäßigerweise umfasst die die Gewindespindel einen ins Freie ragenden Betätigungsansatz. Auf den Betätigungsansatz lässt sich beispielsweise die Kurbel, die auch als ein Schraubenschlüssel oder dergleichen ausgebildet sein kann, oder der Elektromotor aufstecken, vorzugsweise abnehmbar.

Damit sich das Spannelement oder die Spannbacke in der Spannlage an das Ladegut anlegen kann, ist das Spannelement oder dessen Spannbacke beweglich an dem Kniehebel oder dem Scherengestänge angeordnet.

Vorzugsweise sind mehrere Öffnungen zur Anordnung von Befestigungsmitteln vorgesehen. Demnach können die Befestigungsmittel anforderungsgerecht an dem Ladungsträger platziert werden. Die Öffnungen können rasterartig, also in bestimmten Abständen zueinander angeordnet sein.

In weiterer Ausgestaltung ist der Ladungsträger als eine Transportpalette, ein Transportcontainer, eine Ladefläche eines Transportfahrzeugs oder ein Glasscheibenträger ausgebildet.

Um das Befestigungsmittel an das Ladegut anzupassen, ist das Befestigungsmittel teleskopierbar. Demnach können die Spannbacken in ihrer Höhenlage, also ihrem Abstand zu dem Ladungsträger, variiert werden.

Bevorzugt weist das Befestigungsmittel an seinem fußseitigen Ende ein arretierbares Gelenk auf. Das fußseitige Ende stellt einen in eine entsprechende Öffnung des Ladungsträgers einsetzbaren Ansatz dar, der in der Öffnung auch verriegelbar sein kann. Das Gelenk ermöglich es, das Befestigungsmittel in seiner gestreckten Gebrauchslage oder einer abgewinkelten Ruhelage zu verwenden, wobei das Befestigungsmittel in seiner Ruhelage beispielsweise auf dem Ladungsträger aufliegen kann, so dass beim Be- oder Entladen das Ladegut im Wesentlichen nur über die Breite des Befestigungsmittels und nicht über dessen gestreckte Höhe angehoben werden muss. Das Gelenk kann mit Gelenkansätzen in den Rohrförmigen Querschnitt des Befestigungsmittels eingesetzt werden, und unterteilt das Befestigungsmittel in einen relativ kurzen fußseitigen und einen demgegenüber relativ langen kopfseitigen Abschnitt. Das Gelenk ist insbesondere in der Lage, in der das Befestigungsmittel seine gestreckte Gebrauchslage einnimmt, lösbar verrastbar oder klemmbar oder dergleichen arretierbar.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörige Zeichnung näher erläutert.

Es zeigt:
- Fig. 1: eine schematische Darstellung einer Seitenansicht eines Ladungsträgers nach der Erfindung mit Ladegut,
- Fig. 2: eine schematische Darstellung einer Draufsicht auf den Ladungsträger nach Fig. 1 ohne Ladegut,
- Fig. 3: eine schematische Darstellung eines Befestigungsmittels für den Ladungsträger in einer ersten Ausgestaltung,
- Fig. 4: eine weitere schematische Darstellung des Befestigungsmittels nach Fig. 3,
- Fig. 5: eine schematische Darstellung des Befestigungsmittels für den Ladungsträger in einer zweiten Ausgestaltung,
- Fig. 6: eine weitere schematische Darstellung des Befestigungsmittels nach Fig. 5,
- Fig. 7: eine schematische Darstellung des Befestigungsmittels für den Ladungsträger in einer dritten Ausgestaltung,
- Fig. 8: eine weitere schematische Darstellung des Befestigungsmittels nach Fig. 7,
- Fig. 9: eine schematische Darstellung des Befestigungsmittels für den Ladungsträger in einer vierten Ausgestaltung und
- Fig. 10: eine weitere schematische Darstellung des Befestigungsmittels nach Fig. 9.

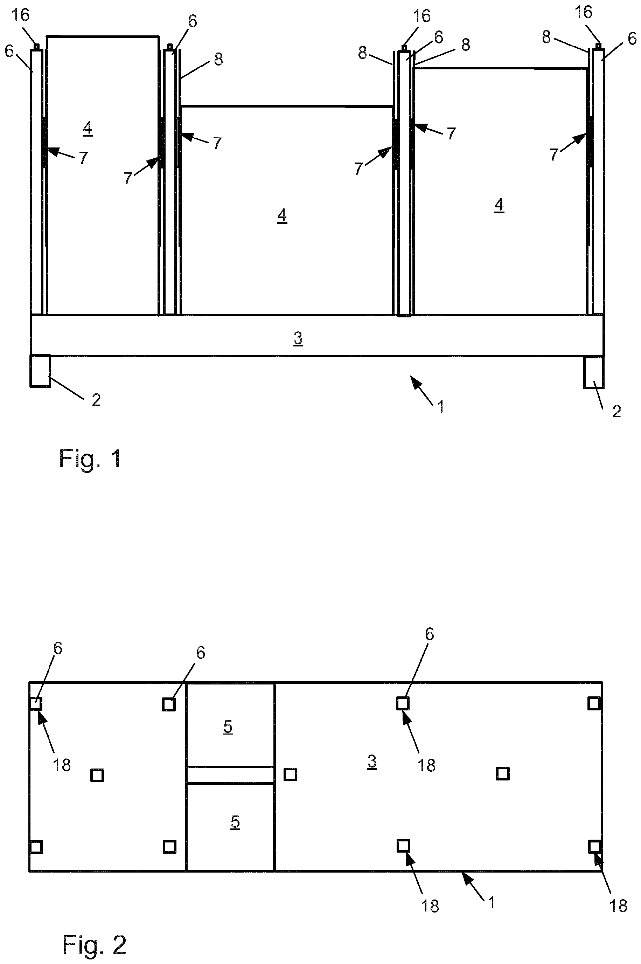

Der Ladungsträger 1 gemäß Fig. 1 ist vorliegend nach Art einer Palette mit Füßen 2 und einer auf den Füßen 2 angebrachten Auflageplattform 3 für Ladegut 4 ausgestaltet. Aufgrund der Füße 2 ist die Auflageplattform 3 des Ladungsträgers 1 beispielsweise mit einer Gabel eines Gabelstaplers unterfahrbar. Die Füße 2 können auch als so genannte Containerecken ausgestaltet sein, um mit Twist-Locks zusammenzuwirken, damit der Ladungsträger 1 unmittelbar auf einem Fahrzeug bzw. Fahrgestell zu befestigen ist. Es können mehrere Fahrgestelle miteinander bzw. mit einem Fahrzeug gekoppelt werden. Selbstverständlich kann das Fahrzeug zum autonomen Fahren ausgelegt sein. Zum Transport rollenförmigen Ladeguts 4 kann die Auflageplattform 3 des Ladungsträgers 1 zumindest abschnittsweise zwei V-förmig zueinander ausgerichtete Flächen 5 umfassen.

Damit das Ladegut 4 sicher auf dem Ladungsträger 1 gehalten wird und nicht unbeabsichtigt von der Auflageplattform rutscht, sind rungenartige Befestigungsmittel 6 vorgesehen, die rohrförmig mit einem quadratischen Querschnitt ausgebildet sind. Die Befestigungsmittel 6 sind mit ihren Fußseiten in korrespondierenden Öffnungen 18 gemäß Fig. 2 in der Auflageplattform 3 des Ladungsträgers 1 festgelegt oder eingesteckt. Zwischen benachbarten Befestigungsmitteln 6 befindet sich das Ladegut 4. Die Öffnungen 18 sind rasterförmig über die Auflageplattform 3 verteilt, so dass Ladegut 4 unterschiedlicher Form und Größe gesichert werden kann.

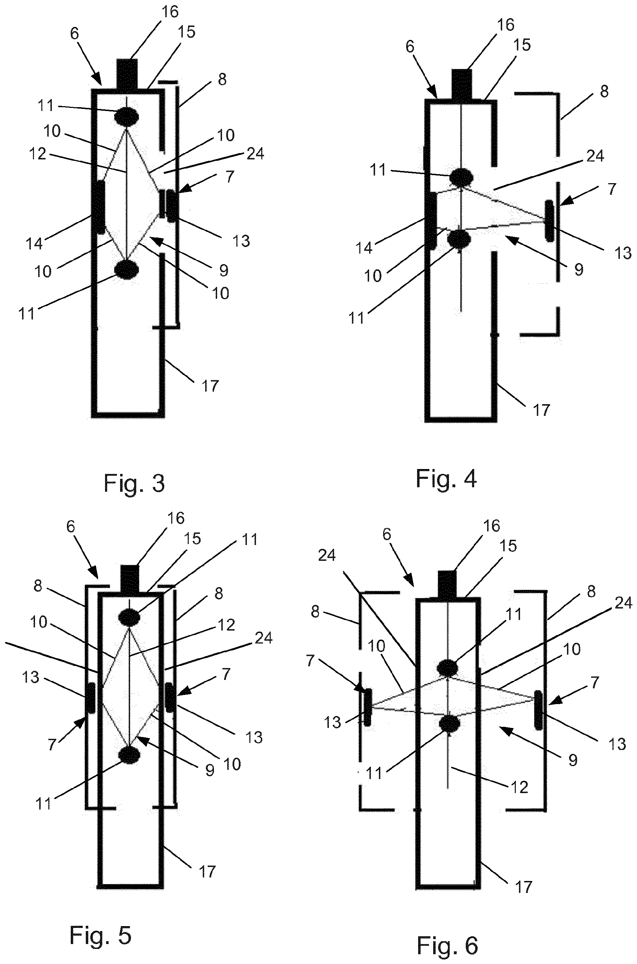

Um das Ladegut 4 zwischen den Befestigungsmitteln 6 zuverlässig festzulegen, weist jedes Befestigungsmittel 6 mindestens ein Spannelement 7 auf, das zur Vergrößerung der lichten Breite des Befestigungsmittels 6 aus eine Ausgangslage gemäß den Fig. 3, 5, 8 in eine Spannlage gemäß den Fig. 4, 6, 8 verlagerbar ist.

Beispielsweise kann der Ladungsträger 1 mit mindestens einem Spaltband als Ladegut 4 bei einem Hersteller des Spaltbandes beladen und mittels der Befestigungsmittel 6 gesichert werden. Der Ladungsträger 1 lässt sich anschließend mittels seiner Containerecken auf einem mit Twist-Locks ausgestatteten Fahrzeug sichern und zur Weiterverarbeitung des Spaltbandes kann der Ladungsträger 1 mit dem mittels der Befestigungsmittel 1 gesicherten Spaltband auf ein Fahrzeug oder ein Fahrgestell eines Verarbeitungsbetriebes umgeladen und weiterbefördert werden. Selbstverständlich kann nicht nur ein Spaltband als Ladegut 4 mittels der Befestigungsmittel 6, die auch als Vario-Rungen bezeichnet werden können, gesichert werden, vielmehr ist die Klemmung jedes relativ formstabilen Ladeguts 4 oder dessen Verpackung möglich.

Die Fig. 3 bis 8 zeigen ein Befestigungsmittel 6, das einen Hohlraum aufweist, der durch die Rohrwandung 17 des rohrförmigen Befestigungsmittels 6 gebildet wird. In dem Hohlraum ist mindestens ein Kniehebel oder ein Scherengestänge 9 oder eine Kolben-/Zylindereinheit angeordnet, an die das Spannelement 7 befestigt ist.

Das eine Spannbacke 8 umfassende Spannelement 7 steht bevorzugt mit einem im Inneren des Befestigungsmittels 5 angeordneten Scherengestänge 9 in Verbindung, das vier parallelogrammartig miteinander gekoppelte Gestängeelemente 10 umfasst, wobei an zwei in Längsrichtung ausgerichteten Gelenken 11 gegenläufige Gewinde vorgesehen sind, in die eine Gewindespindel 12 eingreift und an zwei senkrecht dazu ausgerichteten Gelenken 13 entweder ein Schiebelager 14 und ein Spannelement 7 oder zwei Spannelemente 7 vorgesehen sind. Ist bei der Anordnung eines Spannelementes 7 ein Schiebelager 14 vorgesehen, dann ist dieses Schiebelager 14 bevorzugt im Inneren des Befestigungsmittels 6 festgelegt. Am kopfseitigen Ende des Befestigungsmittels 6 ist eine Kopfplatte 15 mit einem Lager für die Gewindespindel 12 und einem ins Freie ragenden Betätigungsansatz 16 zur Anordnung einer Kurbel oder dergleichen vorgesehen. Es ist auch ein elektrischer Motor oder ein hydraulischer Antrieb denkbar.

Bei einer Drehbewegung der Gewindespindel 12 in die eine Richtung bewegen sich die beiden in Längsrichtung ausgerichteten Gelenken 11 aufeinander zu und das mindestens eine Spannelement 7 wird zur Vergrößerung der lichten Breite des Befestigungsmittels 6 radial in die Spannlage verlagert, in der es benachbartes Ladegut 4 klemmend beaufschlagt. Bei einer Drehbewegung der Gewindespindel 12 in die andere Richtung bewegen sich die beiden in Längsrichtung ausgerichteten Gelenken 11 voneinander weg und das mindestens eine Spannelement 7 wird in Richtung einer Rohrwandung 17 des Befestigungsmittels 6 verlagert. Insbesondere bewegt sich das Spannelement 7 in zur Gewindespindel 12 ausgerichteter Richtung.

Das Spannelement 7 oder dessen Spannbacke 8 können sich abschnittsweise über die Länge des Befestigungsmittels 6 oder im Wesentlichen über dessen gesamte freie Länge, die über die Auflageplattform 3 ragt, erstrecken.

Nach Fig. 3 ist in der Rohrwandung 17 eine Aussparung 24 ausgebildet, durch welche das Scherengestänge 9 bewegbar hindurchragt. Ferner ist eine Spannbacke 8 auf einer Seite des Befestigungsmittels 6 beweglich angebracht. An der der Aussparung 24 gegenüberliegenden Rohrwandung ist das Schiebelager 14 angeordnet. Beim Herausfahren wird die Spannbacke 8 von der Rohrwandung 17 beabstandet, wie es in Figur 4 zu sehen ist.

Eine alternative Ausführungsform ist in Fig. 5 gezeigt, bei der zwei Aussparungen 24 an vorzugsweise gegenüberliegenden Seiten der Rohrwandung 17 ausgeformt sind, wobei kein Schieblager 14 verwendet wird. Die beiden Spannbacken 8 werden gleichzeitig von der Rohrwandung 17 gemäß Figur 6 beabstandet. Ferner können zwei zueinander im rechten Winkel stehende Seiten mit Spannbacken 8 ausgestattet werden. Es können auch mehr als zwei Seiten der Rohrwandung 17 mit Spannbacken 8 und dem zugehörigen Scherengestänge 9 ausgestattet werden. Ergänzend oder alternativ können mehrere Spannbacken 8 entlang der Längsrichtung des Befestigungsmittels 6 angeordnet werden, sodass die Spannbacken und die Mechanismen bezüglich der Senkrechten der Auflageplattform 3 übereinander angeordnet sind, wobei sie vorzugsweise an einer Gewindespindel 12 angebracht sind.

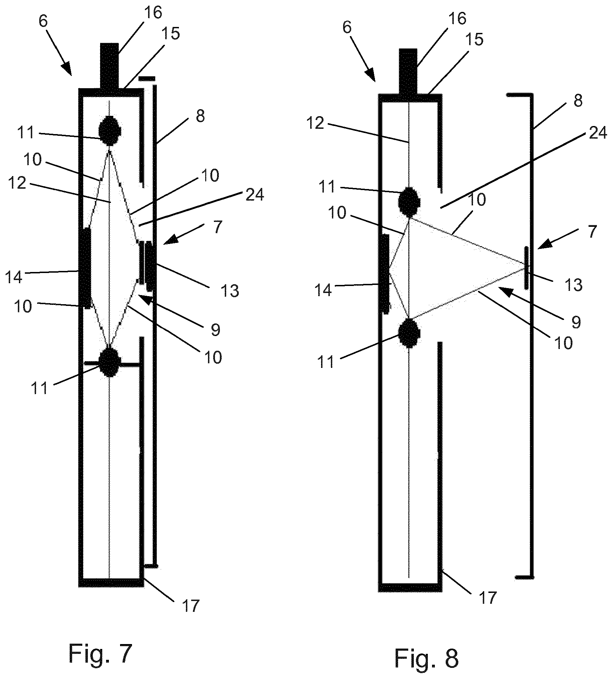

Eine weitere Ausführungsform offenbart Fig. 7, bei der sich die Spannbacken über die gesamte Länge der Rohrwandung 17 erstrecken.

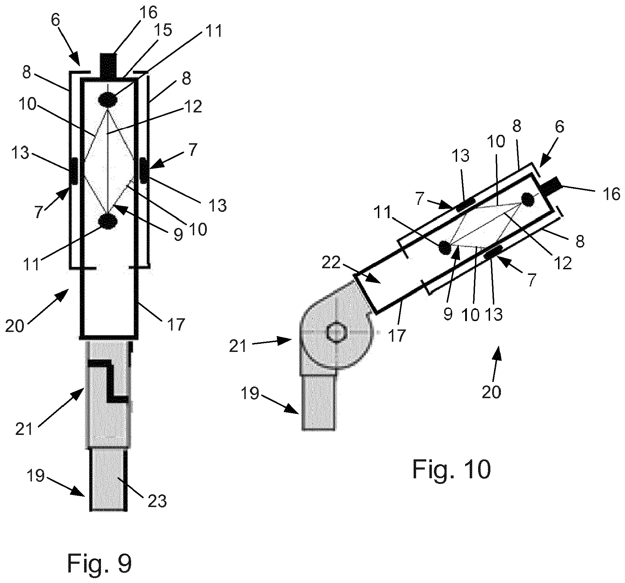

Das Befestigungsmittel 6 weist an seinem fußseitigen Ende 19, das wesentlich kürzer als ein kopfseitiges Ende 20 bemessen ist, ein arretierbares Gelenk 21 auf wie es in Fig. 9 und 10 gezeigt ist. Das fußseitige Ende 19 ist als ein in die entsprechende Öffnung 18 des Ladungsträgers 1 einsetzbarer Ansatz 23 ausgebildet, der in der Öffnung 18 auch festlegbar oder arretierbar sein kann, und das kopfseitige Ende 20 ist mit dem mindestens einen Spannelements 7 versehen. Das Gelenk 21 ermöglicht die Ausrichtung des Befestigungsmittels 6 in einer gestreckten Gebrauchslage gemäß Fig. 9 oder einer abgewinkelten Ruhelage gemäß Fig. 10, wobei das Befestigungsmittel in seiner Ruhelage beispielsweise auf dem Ladungsträger 1 aufliegen kann, so dass beim Be- oder Entladen das Ladegut 4 im Wesentlichen nur über ein relativ geringes Maß angehoben werden muss. Das Gelenk 21 kann mit einem Gelenkansatz 22 in den rohrförmigen Querschnitt des Befestigungsmittels 6 eingesetzt und befestigt werden. Das Gelenk 21 ist insbesondere in der Lage, in der das Befestigungsmittel 6 seine gestreckte Gebrauchslage einnimmt, lösbar verrastbar oder klemmbar oder dergleichen arretierbar.

### Bezugszeichen

- 1.: Ladungsträger
- 2.: Fuß
- 3.: Auflageplattform
- 4.: Ladegut
- 5.: Fläche
- 6.: Befestigungsmittel
- 7.: Spannelement
- 8.: Spannbacke
- 9.: Scherengestänge
- 10.: Gestängeelement
- 11.: Gelenk
- 12.: Gewindespindel
- 13.: Gelenk
- 14.: Schiebelager
- 15.: Kopfplatte
- 16.: Betätigungsansatz
- 17.: Rohrwandung
- 18.: Öffnung
- 19.: Ende
- 20.: Ende
- 21.: Gelenk
- 22.: Gelenkansatz
- 23.: Ansatz
- 24.: Aussparung

## Patentansprüche

1. Befestigungsmittel zur Anordnung an einem Ladungsträger (1) für mindestens ein Ladegut (4), **dadurch gekennzeichnet, dass** mindestens ein mittels eines Kniehebels oder Scherengestänges (9) oder einer Kolben-/Zylindereinheit senkrecht zu einer Längsachse des Befestigungsmittels (6) verlagerbares Spannelement (7) dem Befestigungsmittel (6) zugeordnet ist, wobei der Kniehebel oder das Scherengestänge (9) oder die Kolben-/Zylindereinheit in einem Hohlraum des zumindest abschnittweise rohrförmigen Befestigungsmittels (6) angeordnet ist.

2. Befestigungsmittel nach Anspruch 1, **dadurch gekennzeichnet, dass** das Befestigungsmittel (6) zur form- und kraftschlüssigen Ladungssicherung von Spaltband, Coils, Drahtringen, Ronden sowie Glasscheiben in einem Transportgestell dient.

3. Befestigungsmittel nach Anspruch 1, **dadurch gekennzeichnet, dass** das Befestigungsmittel (6) als eine Alternative zu einer Standard-Runge an einem Coilmuldenfahrzeug Verwendung findet.

4. Befestigungsmittel nach Anspruch 1, **dadurch gekennzeichnet, dass** oberhalb eines fußseitigen Ansatzes (23) ein arretierbares Gelenk (21) angeordnet ist.

5. Ladungsträger für mindestens ein Ladegut (4), das mit mindestens einem lösbar an dem Ladungsträger (1) gehaltenen Befestigungsmittel (6) nach Anspruch 1 kraftschlüssig oder formschlüssig gehalten ist, wobei das Befestigungsmittel (6) mindestens ein Spannelement (7) lagert, das zur Veränderung der lichten Breite des Befestigungsmittels (6) verstellbar ist

6. Ladungsträger nach Anspruch 5, **dadurch gekennzeichnet, dass** sich das Befestigungsmittel (6) rungenartig zu dem Ladungsträger (1) erstreckt und das eine Spannbacke (8) umfassende Spannelement (7) senkrecht zu einer Längsachse des Befestigungsmittels (6) verlagerbar ist.

7. Ladungsträger nach Anspruch 5 oder 6, **dadurch gekennzeichnet, dass** sich der Kniehebel oder das Scherengestänge (9) durch die Rohrwandung (17) des Befestigungsmittels (6) zur Verlagerung des mindestens einen Spannelementes (7) erstreckt.

8. Ladungsträger nach Anspruch 7, **dadurch gekennzeichnet, dass** das Befestigungsmittel (6) einen quadratischen Querschnitt aufweist.

9. Ladungsträger nach einem der Ansprüche 5 bis 8, **dadurch gekennzeichnet, dass** das mindestens eine Spannelement (7) mit einer einen Hydraulikzylinder umfassenden Hydraulikeinrichtung oder einer Gewindespindel (12) zu seiner Verstellung aus einer Ausgangslage, in der es benachbart zu der zugeordneten Rohrwandung (17) des Befestigungsmittels (6) angeordnet ist, in eine Spannlage, in der es beabstandet der zugeordneten Rohrwandung (17) des Befestigungsmittels (6) ausgerichtet ist, verlagerbar ist und umgekehrt.

10. Ladungsträger nach Anspruch 9, **dadurch gekennzeichnet, dass** die Gewindespindel (12) mit einer Kurbel oder elektromotorisch antreibbar ist.

11. Ladungsträger nach Anspruch 9 oder 10, **dadurch gekennzeichnet, dass** die Gewindespindel (12) einen ins Freie ragenden Betätigungsansatz (16) umfasst.

12. Ladungsträger nach einem der Ansprüche 5 bis 11, **dadurch gekennzeichnet, dass** das Spannelement (7) oder dessen Spannbacke (8) beweglich an dem Kniehebel oder dem Scherengestänge (9) angeordnet ist.

13. Ladungsträger nach einem der Ansprüche 5 bis 12, **dadurch gekennzeichnet, dass** mehrere Öffnungen (18) zur Anordnung von Befestigungsmitteln (6) vorgesehen sind.

14. Ladungsträger nach einem der Ansprüche 5 bis 13, **dadurch gekennzeichnet, dass** er als eine Transportpalette, ein Transportcontainer, eine Ladefläche eines Transportfahrzeugs oder ein Glasscheibenträger ausgebildet ist.

15. Ladungsträger nach einem der Ansprüche 5 bis 13, **dadurch gekennzeichnet, dass** das Befestigungsmittel (6) teleskopierbar ist.

## Claims

1. Fastening means for being arranged on a load carrier (1) for at least one load (4), **characterized in that** at least one clamping element (7) which can be moved perpendicularly to a longitudinal axis of the fastening means (6) by means of a toggle lever or scissor linkage (9) or a piston/cylinder unit is associated with the fastening means (6), the toggle lever or the scissor linkage (9) or the piston/cylinder unit being arranged in a cavity of the at least partially tubular fastening means (6).

2. Fastening means according to claim 1, **characterized in that** the fastening means (6) is used for form-fitting and force-locking load securing of slit strip, coils, wire rings, circular blanks and glass panes in a transport frame.

3. Fastening means according to claim 1, **characterized in that** the fastening means (6) is used as an alternative to a standard stanchion on a coil trough vehicle.

4. Fastening means according to claim 1, **characterized in that** a lockable joint (21) is arranged above a base-side attachment (23).

5. Load carrier for at least one load (4) which is held in a form-fitting or force-locking manner using at least one fastening means (6) according to claim 1 which is held releasably on the load carrier (1), wherein the fastening means (6) supports at least one clamping element (7) which can be adjusted in order to change the clear width of the fastening means (6).

6. Load carrier according to claim 5, **characterized in that** the fastening means (6) extends in the manner of a stanchion to the load carrier (1) and the clamping element (7) comprising a clamping jaw (8) can be moved perpendicularly to a longitudinal axis of the fastening means (6).

7. Load carrier according to either claim 5 or claim 6, **characterized in that** the toggle lever or the scissor linkage (9) extends through the tube wall (17) of the fastening means (6) in order to move the at least one clamping element (7).

8. Load carrier according to claim 7, **characterized in that** the fastening means (6) has a square cross section.

9. Load carrier according to any of claims 5 to 8, **characterized in that** the at least one clamping element (7) can be moved by means of a hydraulic device, comprising a hydraulic cylinder, or a threaded spindle (12) for its adjustment from an initial position in which it is adjacent to the associated tube wall (17) of the fastening means (6) into a clamping position in which it is aligned at a distance from the associated tube wall (17) of the fastening means (6), and vice versa.

10. Load carrier according to claim 9, **characterized in that** the threaded spindle (12) can be driven by a crank or by an electric motor.

11. Load carrier according to either claim 9 or claim 10, **characterized in that** the threaded spindle (12) comprises an actuating attachment (16) which protrudes into the open.

12. Load carrier according to any of claims 5 to 11, **characterized in that** the clamping element (7) or its clamping jaw (8) is movably arranged on the toggle lever or the scissor linkage (9).

13. Load carrier according to any of claims 5 to 12, **characterized in that** a plurality of openings (18) are provided for the arrangement of fastening means (6).

14. Load carrier according to any of claims 5 to 13, **characterized in that** it is designed as a transport pallet, a transport container, a loading surface of a transport vehicle or a glass pane carrier.

15. Load carrier according to any of claims 5 to 13, **characterized in that** the fastening means (6) is telescopic.

## Revendications

1. Moyen de fixation destiné à l'agencement sur un porteur de chargement (1) pour au moins une marchandise de chargement (4), **caractérisé en ce qu'**au moins un élément de serrage (7), déplaçable perpendiculairement à un axe longitudinal du moyen de fixation (6) au moyen d'un levier coudé ou d'une tringlerie en ciseaux (9) ou d'une unité piston/cylindre, est attribué au moyen de fixation (6), dans lequel le levier coudé ou la tringlerie en ciseaux (9) ou l'unité piston/cylindre est disposé au moins par sections dans une cavité du moyen de fixation (6) tubulaire.

2. Moyen de fixation selon la revendication 1, **caractérisé en ce que** ledit moyen de fixation (6) sert pour l'arrimage de chargeement, par complémentarité de forme et de force, de bandes refendues, des bobines, des anneaux de fil, des tôles rondes, ainsi que des vitres dans un châssis de transport.

3. Moyen de fixation selon la revendication 1, **caractérisé en ce que** ledit moyen de fixation (6) est utilisé comme alternative à un montant standard sur un véhicule à fosse à bobine.

4. Moyen de fixation selon la revendication 1, **caractérisé en ce qu'**une articulation (21) verrouillable est disposée au-dessus d'un joint (23) côté pied.

5. Porteur de chargement pour au moins une marchandise de chargement (4), lequel est maintenue par complémentarité de forme ou de force avec au moins un moyen de fixation (6) selon la revendication 1 maintenu de manière amovible sur le porteur de chargement (1), dans lequel le moyen de fixation (6) supporte au moins un élément de serrage (7), lequel est réglable pour la modification de la largeur libre du moyen de fixation (6).

6. Porteur de chargement selon la revendication 5, **caractérisé en ce que** le moyen de fixation (6) s'étend comme un montant jusqu'au porteur de charge (1) et l'élément de serrage (7) comprenant une mâchoire de serrage (8) est déplaçable perpendiculairement à un axe longitudinal du moyen de fixation (6).

7. Porteur de chargement selon la revendication 5 ou 6, **caractérisé en ce que** le levier coudé ou la tringlerie en ciseaux (9) s'étend à travers la paroi tubulaire (17) du moyen de fixation (6) pour le déplacement de l'au moins un élément de serrage (7).

8. Porteur de chargement selon la revendication 7, **caractérisé en ce que** le moyen de fixation (6) comporte une section transversale carrée.

9. Porteur de chargement selon l'une quelconque des revendications 5 à 8, **caractérisé en ce que** l'au moins un élément de serrage (7) peut être déplacé avec un dispositif hydraulique comprenant un vérin hydraulique ou une broche filetée (12) pour son réglage d'une position de départ, dans laquelle il est disposé adjacent à la paroi tubulaire (17) attribuée du moyen de fixation (6), à une position de serrage, dans laquelle il est aligné à une distance de la paroi tubulaire (17) attribuée du moyen de fixation (6), et vice versa.

10. Porteur de chargement selon la revendication 9, **caractérisé en ce que** la broche filetée (12) peut être entraînée par une manivelle ou par un moteur électrique.

11. Porteur de chargement selon la revendication 9 ou 10, **caractérisé en ce que** la broche filetée (12) comprend un prolongement d'actionnement (16) faisant saillie vers l'extérieur.

12. Porteur de chargement selon l'une quelconque des revendications 5 à 11, **caractérisé en ce que** l'élément de serrage (7) ou sa mâchoire de serrage (8) est disposé de manière mobile sur le levier coudé ou la tringlerie en ciseaux (9).

13. Porteur de chargement selon l'une quelconque des revendications 5 à 12, **caractérisé en ce que** plusieurs ouvertures (18) sont prévues pour l'agencement des moyens de fixation (6).

14. Porteur de chargement selon l'une quelconque des revendications 5 à 13, **caractérisé en ce qu'**il est conçu sous la forme d'une palette de transport, d'un conteneur de transport, d'une surface de chargement d'un véhicule de transport ou d'un porteur de vitres.

15. Porteur de chargement selon l'une quelconque des revendications 5 à 13, **caractérisé en ce que** le moyen de fixation (6) est télescopique.
